(19) Europäisches Patentamt
European Patent Office
Office européen des brevets

(11) EP 2 247 929 B1

# (12) EUROPEAN PATENT SPECIFICATION

(45) Date of publication and mention of the grant of the patent:
**28.09.2016 Bulletin 2016/39**

(21) Application number: **08709427.2**

(22) Date of filing: **15.02.2008**

(51) Int Cl.:
***G01J 3/42*** (2006.01) ***G01J 3/08*** (2006.01)
***G01N 21/39*** (2006.01) ***G01N 21/27*** (2006.01)
***G01N 21/35*** (2014.01)

(86) International application number:
**PCT/GB2008/000539**

(87) International publication number:
**WO 2009/101374 (20.08.2009 Gazette 2009/34)**

## (54) INFRARED SPECTROMETER

INFRAROT-SPEKTROMETER

SPECTROMÈTRE INFRAROUGE

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**10.11.2010 Bulletin 2010/45**

(73) Proprietor: **The Science and Technology Facilities Council**
**Didcot, Oxon OX11 0QX (GB)**

(72) Inventor: **WEIDMANN, Damien**
**Reading RG1 4SQ (GB)**

(74) Representative: **Boult Wade Tennant**
**Verulam Gardens**
**70 Gray's Inn Road**
**London WC1X 8BT (GB)**

(56) References cited:
**EP-A- 1 508 794**
**WO-A-93/15391**
**JP-A- 2003 014 631**
**US-A- 5 877 862**
**US-B1- 6 841 778**

- **WEIDMANN D ET AL: "Development of a compact quantum cascade laser spectrometer for field measurements of CO2 isotopes" APPLIED PHYSICS B ; LASERS AND OPTICS, SPRINGER, BERLIN, DE, vol. 80, no. 2, 1 February 2005 (2005-02-01), pages 255-260, XP019337285 ISSN: 1432-0649 cited in the application**
- **HAISCH M: INAUGURAL DISSERTATION, DUESSELDORF, DE, 1 January 1995 (1995-01-01), XP002041167**
- **UEHARA K ET AL: "Isotope analysis of environmental substances by a new laser-spectroscopic method utilizing different pathlengths" SENSORS AND ACTUATORS B, ELSEVIER SEQUOIA S.A., LAUSANNE, CH, vol. 74, no. 1-3, 15 April 2001 (2001-04-15), pages 173-178, XP004233674 ISSN: 0925-4005**

EP 2 247 929 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Field of the Invention

The present invention relates to a infrared, IR, spectrometer and in particular to a tunable IR laser spectrometer.
The present invention also relates to a method of isotopic ratio determination.

### Background of the Invention

Stable isotopomer concentration and flux measurements have become a vital underpinning technique in many areas of science. To date, mass spectrometry (MS) has been the preferred technique to perform isotope analysis. For any application requiring real time, high frequency data, and/or field measurements, MS suffers from drawbacks: tedious sample taking and preparation, difficulty of real time analysis. Furthermore, MS does not resolve small mass differences particularly well. The use of MS is confined to a dedicated laboratory and field applications are therefore difficult. There is a growing need to overcome these drawbacks and to seek alternative instrumentation for high precision (~0.1‰) isotopic ratio determination both in the academic and industrial sectors. Applications encompass atmospheric studies, geology, ecology, medical research, planetary exploration, combustion science, fundamental analytical chemistry, and food industry quality check.
Therefore, there is requirement for a method and apparatus for providing high precision isotopomer concentration and ratio measurements without the above drawbacks.
A doctoral dissertation by Michael Haisch (Heinrich Heine University of Dusseldorf, 1995) describes a spectrometer including a light source for generating a first and second beam. The first beam is passed through a first sample cell and the second beam is passed through a second sample cell. The beams are then passed to a chopper such that the first and second beams are alternately received at a detector.
JP 2003-14631 describes a spectrometer having a light source, wherein the beam from the light source is split. The first portion of the split beam is received by the sample cell, and the second portion of the split beam follows a pathway which avoids the sample cell. A chopper causes the first and second portions of the beams to be alternately received by a detector.

## SUMMARY OF THE INVENTION

Generally, the present invention provides a method and apparatus for detecting, by absorption spectroscopy, an isotopic ratio of a sample, by passing first and second laser beams of different frequencies through the sample. In a particular example, this may be applied to the determination of $^{12}CO_2$ :$^{13}CO_2$ or similar. In a first aspect of the invention, there is an infrared, IR, spectrometer according to claim 1.
Typically, two IR absorption cells are used, a first containing a reference gas of known isotopic ratio and the second containing a sample of unknown isotopic ratio.
An interlacer, switcher or reflective chopper is used so that as the laser frequencies are scanned the absorption of the sample cell and the reference cell are detected alternately. This ensures that the apparatus is continuously calibrated and rejects the baseline noise when phase sensitive detection is used.
Preferably, the rate at which the sample cell and reference cell are alternatively detected is faster than several hundred Hz and even more preferably, above 1 KHz. This improves the signal-to-noise of the system. The wavelength of the lasers may be scanned in synchronisation with this alternate detection frequency. For instance, the full range (or a range of wavelengths between particular absorption bands of the sample and reference) of laser wavelengths may be scanned between each detection cycle. Phase sensitive detection may be used to maintain this synchronisation.
According to an example there is provided a method of selecting a pair of isotopic spectroscopic lines for a sample suitable for use in isotopic ratio determination comprising the step of: (a) selecting a pair of isotopic spectroscopic lines of similar intensities such that a suitable pair of isotopic spectroscopic lines is selected.
Preferably, the method further comprises the step of: (b) comparing the thermal characteristics of said pair of isotopic spectroscopic lines and rejecting said pair if the thermal characteristics are significantly different.
Advantageously, the thermal characteristics are determined to be significantly different if the line intensity or wavelength varies significantly with temperature.
Preferably, the isotopic spectroscopic lines are spaced far apart.
Preferably, the sample is selected from the group consisting of $^{12}CO_2/^{13}CO_2$; $C^{16}O_2/^{16}OC^{18}O$, $H_2{}^{16}O/H_2{}^{18}O$, $^{12}CH_4/^{13}CH_4$, $^{12}CH_4/^{12}CDH_3$, $^{14}N_2O/^{14}N^{15}NO$ and $H_2O/HDO$.
According to a further aspect of the present invention there is provided a method for detecting an isotopic ratio of a sample according to claim 12. In an illustrative example, not forming part of the claimed invention, there is a method comprising the steps of (a) passing a first laser beam and a second laser beam of different frequencies through a sample;

and (b) detecting the optical absorption due to the sample such that a first absorption line and a second absorption line are measured.

According to a further illustrative example, there is provided a method for detecting an isotopic ratio of a sample by measuring the relative intensities of at least one of the following pairs of absorption lines: 3601.4210 $cm^{-1}$ / 2294.4811 $cm^{-1}$, 3599.7027 $cm^{1}$/ 2295.8456 $cm^{-1}$ and 3597.9626 $cm^{-1}$ / 2297.1862 $cm^{-1}$.

Further details of the present invention are described in the accompanying claims.

## Brief description of the Figures

The present invention may be put into practice in a number of ways and an embodiment will now be described by way of example only and with reference to the accompanying drawings, in which:

FIG. 1 shows a schematic diagram of an IR laser spectrometer according to a first embodiment of the present invention, given by way of example only;

FIG. 2 shows a timeline of the data acquired from the IR laser spectrometer of FIG. 1;

FIG. 3 shows a flow-chart of a method of collecting data from the IR laser spectrometer of FIG. 1;

FIG. 4 shows an IR laser spectrometer according to an illustrative example, not forming part of the claimed invention and given by way of example only;

FIG. 5 shows a set of graphs depicting pairs of suitable spectral lines to be investigated by the IR laser spectrometer of FIG.1 or FIG. 4;

FIG. 6a shows a graph illustrating conventional phase sensitive detection in tunable spectroscopy using a chopper; and

FIG. 6b shows a graph illustrating the signal obtained using the IR laser spectrometer of FIG. 1.

## Detailed description of an embodiment

The inventor of the present invention has described carbon isotopomer ratio measurements in "Carbon isotopomers measurement using mid-IR tunable laser sources" Damien Weidmann, et al, Isotopes in Environmental and Health Studies, Vol. 41, No. 4, December 2005, pp293-302 (DOI: 10.1080/10256010500384325).

Absorption spectroscopy techniques, using infrared laser sources, offer an improvement over MS. A useful spectral region for absorption spectroscopy is known as the "fingerprint" region lying in the mid infrared range (2-25 μm), where most molecules exhibit intense vibrational transitions.

As an example, identification and measurement of gases released by volcanoes provide information on magmatic sources and so aid interpretation of volcanic behaviour and eruption forecasting. As well as information on real-time trace gas concentrations in volcanic emissions, isotopic ratio measurements of species including carbon, hydrogen, nitrogen, oxygen and sulphur provide additional information concerning the gas sources and their geochemical history. Stable carbon isotopomers, especially $^{12}CO_2$ and $^{13}CO_2$, are of particular interest. Carbon dioxide is typically the most abundant gas released by volcanoes after $H_2O$. $^{13/12}CO_2$ monitoring can be used as a tracer to discriminate the sources contributing to observed $CO_2$ emissions.

FIG. 1 shows a schematic diagram of an IR spectrometer 10 according a first embodiment of the present invention.

Diode laser DL is a room temperature tunable antimonide laser operating around 3601 $cm^{-1}$. Quantum cascade laser QCL is a room temperature tunable laser operating around 2294 $cm^{-1}$. Off-axis parabolic mirror OAPM1 collimates the beam from the QCL and this collimated beam is combined with the beam from DL using a dichroic mirror DM1.

The combined beam is then split into two paths by a beam splitter BS before each portion of the beam enters a dual channel absorption cell providing the sample-laser interaction volume. Mirror M1 directs one of the split beams into channel 20, whilst the portion passing through the beam splitter enters channel 30 directly. The beams may be split 50:50 or by any other ratio. Channel 20 contains a reference sample of known composition and channel 30 contains a sample under investigation. For instance channel 20 may contain a mixture of $^{12}CO_2$/$^{13}CO_2$ of known proportion and channel 30 may contain a mixture of $^{12}CO_2$/$^{13}CO_2$ of unknown proportion. The pressure, flow rate and temperature of the sample and reference may be controlled and monitored during absorption measurements.

As two wavelengths probe each cell channel, the system performs measurements over four spectroscopic channels.

Detector 1 and detector 2 detect transmitted laser light originating from the DL and QCL respectively. Detector 1 and detector 2 are each respectively sensitive to the wavelengths provided by the DL and QCL lasers. Dichroic mirror DM2 separates the combined beam ensuring that detector 1 receives light originating from the DL and detector 2 receives light originating from the QCL. Off-axis parabolic mirrors QAPM1 and QAPM2 focus the collimated beams onto detectors 1 and 2 respectively.

At the output of the dual channel absorption cell a 10KHz chopper 40 with reflective blades plays the role of an interlacer. Mirror M2 directs the output of channel 20 onto the chopper blades. With the chopper 40 presenting an opening 50 towards the output of the dual absorption cell the output of channel 20 (reference) passes straight through and is not directed towards the two detectors. However, the output from channel 30 (sample) also passes straight through the chopper and is directed onto the two detectors.

With the chopper 40 presenting a reflective blade towards the output of the dual absorption cell the output of channel 30 is blocked by the back of the mirror and the output from channel 20 (reference) is directed onto the two detectors. In this way detectors 1 and 2 sequentially receive IR radiation transmitted through each channel 20, 30 in turn. An acquisition unit collects and stores data from each of the two detectors. The acquisition unit may be in turn connected to a computer system for data manipulation and storage. Alternately, the computer system itself may act as the acquisition unit.

The DL and QCL lasers are each tunable across a range of wavelengths. DL control controls the output wavelength of diode laser DL. QCL control controls the output wavelength of the QCL laser. The wavelengths of each laser are scanned across a particular range in order to obtain an absorption spectrum from the reference and sample with intensity being measured by the two detectors. The tuning of each laser is synchronised such that a step change intensity occurs after each cycle (open, reflective blade) of the chopper. Alternatively, instead of a step change, a smooth continuous wavelength change may be made.

The alternate sampling of the reference cell 20 and sample cell 30 provides an effective onboard calibration.

FIG. 6a shows a schematic illustration of conventional phase sensitive detection in tunable spectroscopy using a chopper. The signal peak to peak amplitude is $S_0$ and only a small variation dS of this amplitude contains useful information.

FIG. 6b shows a schematic illustration of the signal obtained from the present invention using a reflective chopper. The signal peak to peak amplitude is dS. AC levels of amplification can be much higher as only the change is monitored. Other drifting parameters cancel out using such a technique with phase sensitive detection.

FIG. 2 shows the timeline showing the synchronisation between the laser tuning for each laser (having wavelength $\lambda_1$ and $\lambda_2$, respectively) and the chopper state, i.e. which of cell 20 (reference) or 30 (sample) is being measured by detectors 1 and 2. Note that each laser wavelength changes at the same time once a reference/sample cycle has been completed. It is not necessary that the wavelength of each laser changes at the same rate. Alternatively, a smooth variation of wavelength may occur throughout the cycle.

Isotopic ratio is usually expressed in terms of delta value defined by equation 1:

$$\delta = \left( \frac{R_X}{R_S} - 1 \right) \times 1000 \qquad \text{Equation 1}$$

where $R_x$ denotes the ratio of the heavier isotope to the lighter one in the sample to be measured, and $R_s$ refers to the ratio of a calibrated reference sample. Units are "per mil" or ‰.

FIG. 3 shows a flow diagram of a method of obtaining a relative delta value, $\delta_{rel}$ of a $CO_2$ sample. In this case:

$$\delta_{rel} = \frac{P_{13}}{P_{S12}} - 1 \qquad \text{Equation 2}$$

FIG. 4 shows a QCL-based two channel spectrometer 200 which is provided as an illustrative example only, and is not an embodiment of the claimed invention. This two channel spectrometer allows isotopomer measures to be made for certain pairs of spectroscopic lines but has limited functionality when compared with spectrometer 10 of FIG. 1. The identified target lines for this sensor may be located at 2311.105566 $cm^{-1}$ ($^{12}CO_2$, v3) and 2311.398738 $cm^{-1}$ ($^{13}CO_2$, v3), respectively. With this selection, the $\delta^{13}C$ measurements are insensitive to gas temperature variations. However, the line intensities differ by a factor of about 100, and therefore a dual path length absorption cell is required. The sensor has already been described in "Development of a compact quantum cascade laser spectrometer for field measurements of CO2 isotopes", Appl. Phys. B, 80, pp255-260 (2005), incorporated by reference herein. The spectroscopic source is a pulsed, thermoelectrically cooled, DFB QC laser excited by 25 ns current pulses. A dual path length absorption cell 110 is an astigmatic Herriott cell modified to incorporate an additional short path. After exiting the cells, the two beams are directed to two thermoelectrically cooled HgCdZnTe detectors. The complete optical subsystem is housed inside a sealed Delrin case and purged with dry nitrogen to avoid contamination from atmospheric $CO_2$ or corrosive gases. The associated sensor electronics are located below the optical platform. A gas control subsystem alternating the flow of sample and calibration gases into the absorption cell is connected to the instrument. The operating wavelength of the QCL obtained for this system was found to be ~8 $cm^{-1}$ distant from the selected frequencies. Also, an unusually large threshold current (9 A) prevented the use of a fast (~400 Hz) subthreshold current ramp to rapidly tune the laser wavelength. A $^{12}CO_2$ line at 2320.7501 $cm^{-1}$ and a $^{16}O^{12}C^{18}O$ line at 2320.4599 $cm^{-1}$ may be targeted with this device. The intensity ratio of these lines is ~20 The extrapolated precision of $\delta^{13}C$ is ~1 ‰. Because a single laser source is used in spectrometer 200 only close absorption lines may be investigated. Furthermore, the use of a single cell requires separate reference calibration once a sample has been purged.

Before spectroscopic measurements may be taken a suitable pair of spectroscopic absorption lines must be identified. In order to avoid the need for different path lengths within the absorption cells (such as used in spectrometer 200) lines of similar intensity may be chosen. As this technique relies on measuring absolute absorption line intensities the overriding requirement is to avoid lines which behave differently to temperature changes. Ideally, the relative change in intensity for each line in a pair when the temperature varies will be the same. With single laser spectrometers the choice of lines is limited to lines very close together. This leads to difficulty in resolving the lines and usually results in large differences in absolute line intensities. However, with the availability of the dual lasers system lines very far apart in wavelength terms may be used as a pair.

A line selection method, which consists of choosing optimum absorption lines for the two isotopomers under study, involves the consideration of several issues.

The line intensities have to be considered. Ideally, similar intensities would be sought so that the same cell can be used (i.e. same path length), and to limit potential non-linearities in the detection system. The line intensities should also be high enough to ensure the best sensor sensitivity and to allow the use of a compact absorption cell. The temperature stability requirement depends on the Boltzmann distribution of the tworespective isotopic transitions. A similar evolution of the two line intensities with temperature is important to limit sensitivity to temperature fluctuations. This condition is expressed equation 3:

$$\Delta T \bullet \Delta E = \Delta\delta \bullet k \bullet T^2 \qquad \text{Equation 3}$$

where $\Delta\delta$ is the target accuracy on $\delta$, k the Boltzmann constant, T the temperature, $\Delta E$ the energy difference between the lower levels of the two transitions and $\Delta T$ the temperature variation. Hence, in terms of spectroscopic parameters to obtain temperature insensitivity, the lower energy levels must be identical.

The potential spectral and collisional interferences by other species have to be considered. In particular, it is important to avoid interference due to water vapour. Well isolated lines are preferred, making concentration retrievals easier. Other parameters may be dictated by the spectroscopic source to be used. For example, ensuring that the two lines are within the available tuning range and that the source linewidth matches the absorption widths of the selected isotopic line pair.

To implement line selection for any pair of isotopomers of any molecule, an algorithm based on the aforementioned method may be used. First, depending on the experimental conditions, the minimum line intensities to be considered may be defined (cutoff intensity, $S_{min}$). Then, precision parameters may be entered into the algorithm: the minimum acceptable temperature stability $\Delta T$ , the relative difference allowed between the two line intensities $\Delta S$ and the minimum frequency separation required between the two lines $\Delta v$. All the possible line pairs of the two selected isotopomers within the available database are then processed. The identified line pairs then have to be critically examined, taking into account the other aforementioned selection criteria.

The algorithm may be applied to potential $^{12}CO_2$, $^{13}CO_2$ line pairs or any other suitable molecule. The minimum intensity may be set to 10-21 $cm^{-1}$/molec $cm^{-2}$. This intensity criterion is low for atmospheric studies, but sufficient for volcanic environments where $CO_2$ concentrations can exceed several percent.

The parameters may be chosen as follows: a target delta value accuracy of 0.1‰, a temperature stability of better than 0.5 K, a relative difference in intensities of <10% and line separation of at least 0.05 $cm^{-1}$. A stringent condition on line intensities is required to achieve the expected accuracy on the delta value.

FIG. 5 shows the results of applying the above algorithm to the spectroscopic lines of $^{12}CO_2$ and $^{13}CO_2$. The lower graph provides details of the three ro-vibrational band intersections appearing in the main graph: ($\nu$3, $\nu$3), ($\nu$1, $\nu$3), (2$\nu$1 + $\nu$3, $\nu$2), from left to right. One hundred and eighty-eight pairs of transitions satisfy these criteria. The points are located in three regions, detailed in the lower part of FIG. 5, corresponding to the intersection of the $^{12}CO_2$ and $^{13}CO_2$ bands indicated on the upper graph.

FIG. 5 indicates that the optimum selection involves two lines from two different bands, thus requiring the two laser sources of the present invention. With the parameters used to establish this selection, only two pairs belong to the same band (ν3) and the smallest frequency separation is found to be ~25 $cm^{-1}$ for 2336.5590 $cm^{-1}$ ($^{13}CO_2$) and 2311.3990 $cm^{-1}$ ($^{12}CO_2$). Such a tuning range is not accessible from a single semiconductor mid-IR sources.

By choosing more stringent parameters such as $S_{min}$ = 10-20 $cm^{-1}$/molec $cm^{-2}$, ΔT = 10K, ΔS = 1%, only three line pairs are found. They are listed in table 1.

Table 1. Optimum line selection for $^{23/12}CO_2$ ratio measurements.

| $^{12}CO_2$ | | | $^{13}CO_2$ | | |
|---|---|---|---|---|---|
| Frequency ($cm^{-1}$) | Strength ($cm^{-1}$/molec $cm^{-1}$) | Band | Frequency ($cm^{-1}$) | Strength ($cm^{-1}$/molec $cm^{-2}$) | Band |
| 3601.4210 | 3.513e-020 | ν1 + ν3 | 2294.4811 | 3.547e-020 | V3 |
| 3599.7027 | 3.573e-020 | ν1 + ν3 | 22955.8456 | 3.574e-020 | ν3 |
| 3597.9626 | 3.525e-020 | ν1 + ν3 | 2297.1862 | 3.499e-020 | ν3 |

These three line pairs offer the best strategy to achieve a high accuracy for $\delta^{13}C$ measurements.

The line pair selection may be made so that both the two intensities and the two absorption frequencies are close. Inherently, the lower state energies of the selected line pair are different, ΔE ~ 1160 $cm^{-1}$. The expected required temperature stability, calculated with equation 3, is 6 mK. As a consequence, pressure change has a strong effect on the peak amplitude and overlapping wing contributions from one line to the other.

The present invention may be used in:

Geophysical studies: Real time continuous monitoring of isotopomers released by volcanic fumes. The knowledge of isotope concentrations allows the deduction of information about the different sources feeding a volcanic system. The present invention strengthens the reliability of volcanic eruption forecasting. Also oil prospecting can be facilitated by identifying carbon sources using this method.

Atmospheric & environmental sensing: The present invention allows the provision of high temporal and high spatial resolution $^{13}C/^{12}C$ data, thus providing further constraint to carbon budget models. This allows a fuller understanding and account for carbon sources and sinks.

Planetary exploration: The present invention may be used in planetary exploration, especially Mars exploration.

Medical diagnostics: Real time, continuous monitoring of trace molecule enables non-invasive breath diagnostics. For instance, the activity of Pylobacter Pylori (bacteria responsible of stomach ulcer) may be identified by the measurement of $^{12}CO_2/^{13}CO_2$ ratio in breath. $^{12}C/^{13}C$ ratio may also discriminate between a catabolic and anabolic state of living cells.

**Agronomy and food industry:** Isotopomers concentration contained in a given product may indicate the product origin. Real time, continuous monitoring of isotopic ratio by the present invention may provide on-line implementation, and detection of artificial substitutes.

As will be appreciated by the skilled person, details of the above embodiments may be varied without departing from the scope of the present invention.

In a particular illustrative example, the chopper may be placed before the absorption cells 20, 30 to alternately block or switch the incident IR beams rather than blocking the transmitted beams. In this alternative example the beam splitter may not be required resulting in all of the available laser intensity being incident on one cell at a time. Obviously, the detector arrangement will require adjustment accordingly.

In an illustrative example only, a single detector may be used provided that it can detect both wavelengths.

Although a 10 kHz chopper frequency has been described, any suitable frequency may be used.

Preferred embodiments and methods of the present invention discussed in the foregoing are to be understood as descriptions for illustrative purposes only, and it will be appreciated that numerous changes, substitutions, omissions, and updates thereof are possible without departing from the scope of the claims.

## Claims

1. An infrared, IR, spectrometer for isotopic ratio determination of a sample, comprising:

a first tunable IR laser for providing a first beam at a first wavelength;
a second tunable IR laser for providing a second beam at a second wavelength different from the first wavelength;
a first absorption cell (20) for containing a reference sample of known isotopic ratio and arranged to receive both first and second beams;
a second absorption cell (30) for containing a sample of unknown isotopic ratio and arranged to receive both first and second beams;
a first optical absorption detector arranged to detect said first wavelength;
a second optical absorption detector arranged to detect said second wavelength; and
an interlacer (40) arranged so that, alternately, IR radiation transmitted through the first or the second absorption cell (20, 30) is directed towards said first and second optical absorption detectors, so as to switch the IR radiation detected at the first and second optical absorption detectors between either:

IR radiation transmitted through the first absorption cell (20); or
IR radiation transmitted through the second absorption cell (30).

**2.** The IR spectrometer according to claim 1, wherein the interlacer is an optical chopper comprising at least one reflective blade angled so that, alternately, the IR radiation transmitted through the first optical absorption cell or the second optical absorption cell is directed towards said first and said second optical absorption detectors.

**3.** The IR spectrometer according to claim 1 and claim 2, wherein the wavelengths of said first and second tunable IR lasers are changeable after said first and said second optical absorption detectors have been blocked.

**4.** The IR spectrometer according to claim 2 or 3, wherein the first and second IR tunable lasers are arranged to vary the first and second wavelengths in synchronisation with the optical chopper.

**5.** The IR spectrometer of claim 1, wherein the first and second wavelengths are arranged to be varied across a selection of absorption lines of a sample being measured.

**6.** The IR spectrometer of claim 4, wherein the optical chopper is arranged to direct transmitted IR radiation from one of said first and second optical absorption cells (20, 30) on to both of said first and second optical absorption detectors at a frequency.

**7.** The IR spectrometer of claim 6, wherein the first and second optical absorption detectors are arranged to detect at the frequency.

**8.** The IR Spectrometer of claim 7, wherein the detection is maintained at the frequency by phase detection of the chopper frequency.

**9.** The IR spectrometer according to any previous claim further comprising a beam combiner arranged to combine said first beam with said second beam to form a combined beam such that said first absorption cell (20) and said second absorption cell (30) each receive a portion of said combined beam.

**10.** The IR spectrometer according to any previous claim further comprising a beam separator arranged to separate said first wavelength from said second wavelength such that said first wavelength is detected by said first optical absorption detector and said second wavelength is detected by said second optical absorption detector.

**11.** The IR spectrometer according to any previous claim, wherein said first and second absorption cells (20, 30) contain a sample consisting of one of $^{12}CO_2/^{13}CO_2$, $C^{16}O_2/^{16}OC^{18}O$, $H_2{}^{16}O/H_2{}^{18}O$,$^{12}CH_4/^{13}CH4$, $^{12}CH_4/^{12}CDH_3$,$^{14}N_2O/^{14}N^{15}NO$ and $H_2O/HDO$.

**12.** A method of isotopic ratio determination comprising the steps of:

a. generating a first beam at a first wavelength from a first tunable IR laser;
b. generating a second beam at a second wavelength from a second tunable IR laser, the second wavelength different from the first wavelength;
c. passing the first beam and the second beam through a first absorption cell (20) containing a reference sample of known isotopic ratio;
d. passing the first beam and the second beam through a second absorption cell (30) containing a sample of unknown isotopic ratio;

e. detecting at a first optical absorption detector arranged to detect the first wavelength and a second optical absorption detector arranged to detect the second wavelength, the absorption due to the reference sample contained within said first absorption cell (20);

f. detecting at the said first and second optical absorption detector the absorption due to the sample contained within said second absorption cell (30) such that the isotopic ratio of said sample is determined; and

g. directing, alternately, IR radiation transmitted through the first or the second absorption cell towards said first and second optical absorption detectors such that the IR radiation detected at the first and second detectors is switched between either the IR radiation transmitted through the first absorption cell, or the IR radiation transmitted through the second absorption cell, such that the detecting steps e and f occur in turn.

**13.** The method of claim 12 further comprising the step of:

h. combining said first tunable IR laser beam with said second tunable IR laser beam before passing both laser beams through both first and second absorption cells (20, 30).

**14.** The method according to claim 12 or claim 13 further comprising the step of varying the wavelength of each tunable IR laser beam following each sequence of step e and f.

## Patentansprüche

**1.** Infrarot (IR)-Spektrometer zur Bestimmung eines Isotopenverhältnisses an einer Probe, wobei das IR-Spektrometer aufweist:

einen ersten durchstimmbaren IR-Laser zum Liefern eines ersten Strahls mit einer ersten Wellenlänge;

einen zweiten durchstimmbaren IR-Laser zum Liefern eines zweiten Strahls mit einer zweiten Wellenlänge, die sich von der ersten Wellenlänge unterscheidet;

eine erste Absorptionszelle (20) zur Aufnahme einer Referenzprobe mit einem bekannten Isotopenverhältnis, die so angeordnet ist, dass sie den ersten und den zweiten Strahl erhält;

eine zweite Absorptionszelle (20) zur Aufnahme einer Probe mit einem unbekannten Isotopenverhältnis, die so angeordnet ist, dass sie den ersten und den zweiten Strahl erhält;

einen ersten optischen Absorptionsdetektor zum Erfassen der ersten Wellenlänge;

einen zweiten optischen Absorptionsdetektor zum Erfassen der zweiten Wellenlänge; und

einen Verschränker (40), der so ausgebildet ist, dass durch die erste oder die zweite Absorptionszelle (20, 30) hindurchgelassene IR-Strahlung abwechselnd zu dem ersten und zu dem zweiten optischen Absorptionsdetektor gerichtet wird, sodass die an dem ersten und zweiten optischen Absorptionsdetektor erfasste IR-Strahlung zwischen

der durch die erste Absorptionszelle (20) hindurchgelassenen IR-Strahlung und
der durch die zweite Absorptionszelle (30) hindurchgelassenen IR-Strahlung wechselt.

**2.** IR-Spektrometer nach Anspruch 1, wobei der Verschränker ein optischer Zerhacker ist, der zumindest eine reflektierende Lamelle aufweist, die einen solchen Winkel aufweist, dass die durch die erste optische Absorptionszelle bzw. durch die zweite optische Absorptionszelle hindurchgelassene IR-Strahlung abwechselnd zu dem ersten und zu dem zweiten optischen Absorptionsdetektor gerichtet wird.

**3.** IR-Spektrometer nach Anspruch 1 oder 2, wobei die Wellenlängen des ersten und zweiten durchstimmbaren IR-Lasers nach dem Blockieren des ersten und zweiten optischen Absorptionsdetektors geändert werden können.

**4.** IR-Spektrometer nach Anspruch 2 oder 3, wobei der erste und der zweite durchstimmbare IR-Laser so ausgebildet sind, dass die erste und die zweite Wellenlänge synchron zum optischen Zerhacker geändert werden.

**5.** IR-Spektrometer nach Anspruch 1, wobei die erste und die zweite Wellenlänge gemäß einer Auswahl von Absorptionslinien einer zu messenden Probe geändert werden können.

**6.** IR-Spektrometer nach Anspruch 4, wobei der optische Zerhacker dazu ausgebildet ist, von der ersten oder der zweiten Absorptionszelle (20, 30) hindurchgelassene IR-Strahlung mit einer Frequenz sowohl auf den ersten als auch den zweiten optischen Absorptionsdetektor zu richten.

7. IR-Spektrometer nach Anspruch 6, wobei der erste und der zweiten optische Absorptionsdetektor zum Erfassen der Frequenz ausgebildet sind.

8. IR-Spektrometer nach Anspruch 7, wobei die Erfassung durch Phasendetektion der Zerhackerfrequenz auf der Frequenz gehalten wird.

9. IR-Spektrometer nach einem der vorhergehenden Ansprüche, das ferner einen Strahlkombinierer aufweist, der zum Kombinieren des ersten Strahls mit dem zweiten Strahl zur Ausbildung eines kombinierten Strahls ausgebildet ist, sodass die erste Absorptionszelle (20) und die zweite Absorptionszelle (30) jeweils einen Teil des kombinierten Strahls erhalten.

10. IR-Spektrometer nach einem der vorhergehenden Ansprüche, das ferner einen Strahltrenner aufweist, der zum Trennen der ersten Wellenlänge von der zweiten Wellenlänge ausgebildet ist, sodass die erste Wellenlänge von dem ersten optischen Absorptionsdetektor und die zweite Wellenlänge von dem zweiten optischen Absorptionsdetektor erfasst wird.

11. IR-Spektrometer nach einem der vorhergehenden Ansprüche, wobei die erste und die zweite Absorptionszelle (20, 30) eine Probe enthalten, die aus $^{12}CO_2/^{13}CO_2$, $C^{16}O_2/^{16}OC^{18}O$, $H_2{}^{16}O/H_2{}^{18}O$, $^{12}CH_4/^{13}CH_4$, $^{12}CH_4/^{12}CDH_3$, $^{14}N_2O/^{14}N^{15}NO$ oder $H_2O$/HDO besteht.

12. Verfahren zur Bestimmung eines Isotopenverhältnisses, das Schritte aufweist zum:

a. Erzeugen eines ersten Strahls mit einer ersten Wellenlänge mit Hilfe eines ersten durchstimmbaren IR-Lasers;
b. Erzeugen eines zweiten Strahls mit einer zweiten Wellenlänge mit Hilfe eines zweiten durchstimmbaren IR-Lasers, wobei sich die zweite Wellenlänge von der ersten Wellenlänge unterscheidet
c. Hindurchführen des ersten Strahls und des zweiten Strahls durch eine erste Absorptionszelle (20), die eine Referenzprobe mit einem bekannten Isotopenverhältnis enthält;
d. Hindurchführen des ersten Strahls und des zweiten Strahls durch eine zweite Absorptionszelle (30), die eine Probe mit einem unbekannten Isotopenverhältnis enthält;
e. Detektieren der Absorption durch die in der ersten Absorptionszelle (20) enthaltene Referenzprobe an einem ersten optischen Absorptionsdetektor, der zum Erfassen der ersten Wellenlänge ausgebildet ist, und an einem zweiten optischen Absorptionsdetektor, der zum Erfassen der zweiten Wellenlänge ausgebildet ist;
f. Detektieren der Absorption durch die in der zweiten Absorptionszelle (30) enthaltene Probe an dem ersten und dem zweiten optischen Absorptionsdetektor, sodass das Isotopenverhältnis der Probe bestimmt wird; und
g. abwechselndes Richten der durch die erste oder die zweite Absorptionszelle hindurchgelassenen IR-Strahlung auf den ersten und den zweiten optischen Absorptionsdetektor, sodass die an dem ersten und zweiten optischen Absorptionsdetektor erfasste IR-Strahlung zwischen der durch die erste Absorptionszelle hindurchgelassenen IR-Strahlung und der durch die zweite Absorptionszelle hindurchgelassenen IR-Strahlung wechselt, sodass die Erfassungsschritte e und f abwechselnd erfolgen.

13. Verfahren nach Anspruch 12, das ferner einen Schritt umfasst zum:

h. Kombinieren des ersten durchstimmbaren IR-Laserstrahls mit zweiten durchstimmbaren IR-Laserstrahl, bevor beide Laserstrahlen durch die erste und die zweite Absorptionszelle (20, 30) geführt werden.

14. Verfahren nach Anspruch 12 oder Anspruch 13, das ferner einen Schritt zum Ändern der Wellenlänge eines jeden durchstimmbaren IR-Laserstrahls im Anschluss an jede Abfolge aus Schritt e und f umfasst.

**Revendications**

1. Spectromètre infrarouge, IR, pour une détermination de rapport isotopique d’un échantillon, comprenant :

un premier laser IR accordable pour fournir un premier faisceau à une première longueur d’onde ;
un deuxième laser IR accordable pour fournir un deuxième faisceau à une deuxième longueur d’onde différente de la première longueur d’onde ;

une première cellule d'absorption (20) pour contenir un échantillon de référence de rapport isotopique connu et agencée pour recevoir à la fois les premier et deuxième faisceaux ;
une deuxième cellule d'absorption (30) pour contenir un échantillon de rapport isotopique inconnu et agencée pour recevoir à la fois les premier et deuxième faisceaux ;
un premier détecteur d'absorption optique agencé pour détecter ladite première longueur d'onde ;
un deuxième détecteur d'absorption optique agencé pour détecter ladite deuxième longueur d'onde ; et
un entrelaceur (40) agencé de sorte que, de manière alternée, un rayonnement IR transmis à travers la première ou la deuxième cellule d'absorption (20, 30) soit dirigé vers lesdits premier et deuxième détecteurs d'absorption optique, de manière à commuter le rayonnement IR détecté au niveau des premier et deuxième détecteurs d'absorption optique entre soit :

un rayonnement IR transmis à travers la première cellule d'absorption (20) ; ou
un rayonnement IR transmis à travers la deuxième cellule d'absorption (30).

**2.** Spectromètre IR selon la revendication 1, dans lequel l'entrelaceur est un hacheur optique comprenant au moins une lamelle réfléchissante inclinée de sorte que, de manière alternée, le rayonnement IR transmis à travers la première cellule d'absorption optique ou la deuxième cellule d'absorption optique soit dirigé vers lesdits premier et deuxième détecteurs d'absorption optique.

**3.** Spectromètre IR selon les revendications 1 et 2, dans lequel les longueurs d'onde desdits premier et deuxième lasers IR accordables peuvent être modifiées après que lesdits premier et deuxième détecteurs d'absorption optique ont été bloqués.

**4.** Spectromètre IR selon la revendication 2 ou 3, dans lequel les premier et deuxième lasers IR accordables sont agencés pour faire varier les première et deuxième longueurs d'onde en synchronisation avec le hacheur optique.

**5.** Spectromètre IR de la revendication 1, dans lequel les première et deuxième longueurs d'onde sont agencées de manière à varier entre une sélection de raies d'absorption d'un échantillon qui est mesuré.

**6.** Spectromètre IR de la revendication 4, dans lequel le hacheur optique est agencé pour diriger un rayonnement IR transmis à partir de l'une desdites première et deuxième cellules d'absorption optique (20, 30) sur, à la fois, lesdits premier et deuxième détecteurs d'absorption optique à une certaine fréquence.

**7.** Spectromètre IR de la revendication 6, dans lequel les premier et deuxième détecteurs d'absorption optique sont agencés pour une détection à la fréquence.

**8.** Spectromètre IR de la revendication 7, dans lequel la détection est maintenue à la fréquence par une détection de phase de la fréquence de hacheur.

**9.** Spectromètre IR selon l'une des revendications précédente, comprenant en outre un combineur de faisceaux agencé pour combiner ledit premier faisceau avec ledit deuxième faisceau pour former un faisceau combiné de sorte que ladite première cellule d'absorption (20) et ladite deuxième cellule d'absorption (30) reçoivent chacune une partie dudit faisceau combiné.

**10.** Spectromètre IR selon l'une des revendications précédentes, comprenant en outre un séparateur de faisceaux agencé pour séparer ladite première longueur d'onde de ladite deuxième longueur d'onde de sorte que ladite première longueur d'onde soit détectée par ledit premier détecteur d'absorption optique et ladite deuxième longueur d'onde soit détectée par ledit deuxième détecteur d'absorption optique.

**11.** Spectromètre IR selon l'une des revendications précédentes, dans lequel lesdites première et deuxième cellules d'absorption (20, 30) contiennent un échantillon consistant en l'un parmi $^{12}CO_2/^{13}CO_2$, $C^{16}O_2/^{16}OC^{18}O$, $H_2{}^{16}O/H_2{}^{18}O$, $^{12}CH_4/^{13}CH_4$, $^{12}CH_4/^{12}CDH_3$, $^{14}N_2O/^{14}N^{15}NO$ et $H_2O/HDO$.

**12.** Procédé de détermination de rapport isotopique comprenant les étapes qui consistant :

a. à générer un premier faisceau à une première longueur d'onde à partir d'un premier laser IR accordable ;
b. à générer un deuxième faisceau à une deuxième longueur d'onde à partir d'un deuxième laser IR accordable, la deuxième longueur d'onde étant différente de la première longueur d'onde ;

c. à faire passer le premier faisceau et le deuxième faisceau à travers une première cellule d'absorption (20) contenant un échantillon de référence de rapport isotopique connu ;

d. à faire passer le premier faisceau et le deuxième faisceau à travers une deuxième cellule d'absorption (30) contenant un échantillon de rapport isotopique inconnu ;

e. à détecter au niveau d'un premier détecteur d'absorption optique agencé pour détecter la première longueur d'onde et d'un deuxième détecteur d'absorption optique agencé pour détecter la deuxième longueur d'onde, l'absorption due à l'échantillon de référence contenu dans ladite première cellule d'absorption (20) ;

f. à détecter au niveau desdits premier et deuxième détecteurs d'absorption optique l'absorption due à l'échantillon contenu dans ladite deuxième cellule d'absorption (30) de sorte que le rapport isotopique dudit échantillon soit déterminé ; et

g. à diriger, de manière alternée, un rayonnement IR transmis à travers la première ou la deuxième cellule d'absorption vers lesdits premier et deuxième détecteurs d'absorption optique de sorte que le rayonnement IR détecté au niveau des premier et deuxième détecteurs soit commuté entre soit le rayonnement IR transmis à travers la première cellule d'absorption, soit le rayonnement IR transmis à travers la deuxième cellule d'absorption, de sorte que les étapes de détection e et f se produisent successivement.

**13.** Procédé de la revendication 12 comprenant en outre l'étape qui consiste :

h. à combiner ledit premier faisceau laser IR accordable avec ledit deuxième faisceau laser IR accordable avant de faire passer les deux faisceaux laser à travers les première et deuxième cellules d'absorption (20, 30).

**14.** Procédé selon la revendication 12 ou 13, comprenant en outre l'étape qui consiste à faire varier la longueur d'onde de chaque faisceau laser IR accordable suite à chaque séquence des étapes e et f.

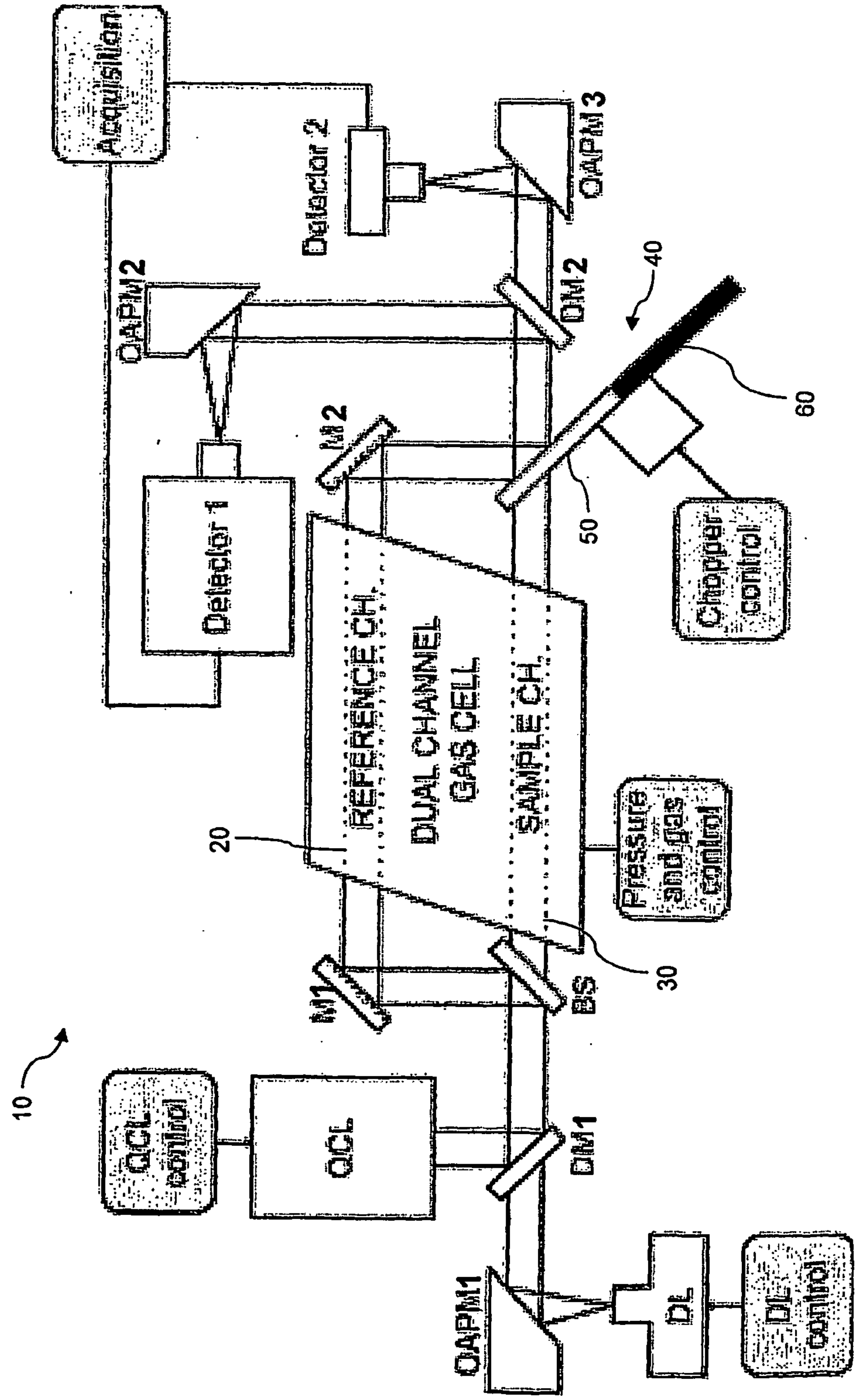
Acquisition
Detector 2
OAPM 3
OAPM 2
DM 2
40
60
Detector 1
M 2
50
Chopper control
REFERENCE CH.
DUAL CHANNEL
GAS CELL
SAMPLE CH.
20
Pressure and gas control
30
M1
BS
10
QCL control
QCL
DM1
OAPM1
DL
DL control

FIG. 1

FIG. 2

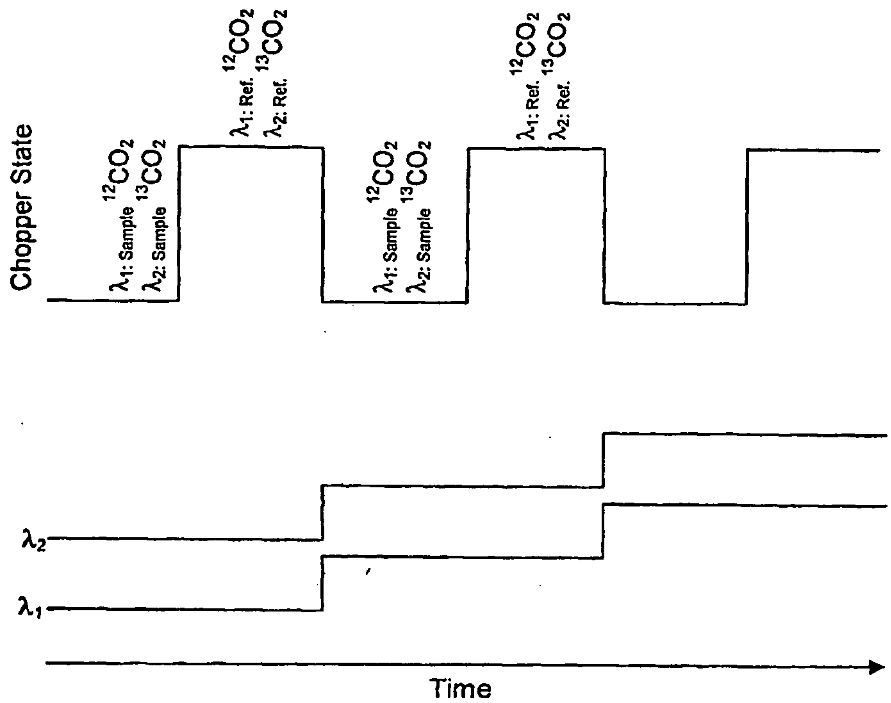
Chopper State
λ1: Sample 12CO2
λ2: Sample 13CO2
λ1: Ref. 12CO2
λ2: Ref. 13CO2
λ1: Sample 12CO2
λ2: Sample 13CO2
λ1: Ref. 12CO2
λ2: Ref. 13CO2
λ2
λ1
Time

FIG. 3

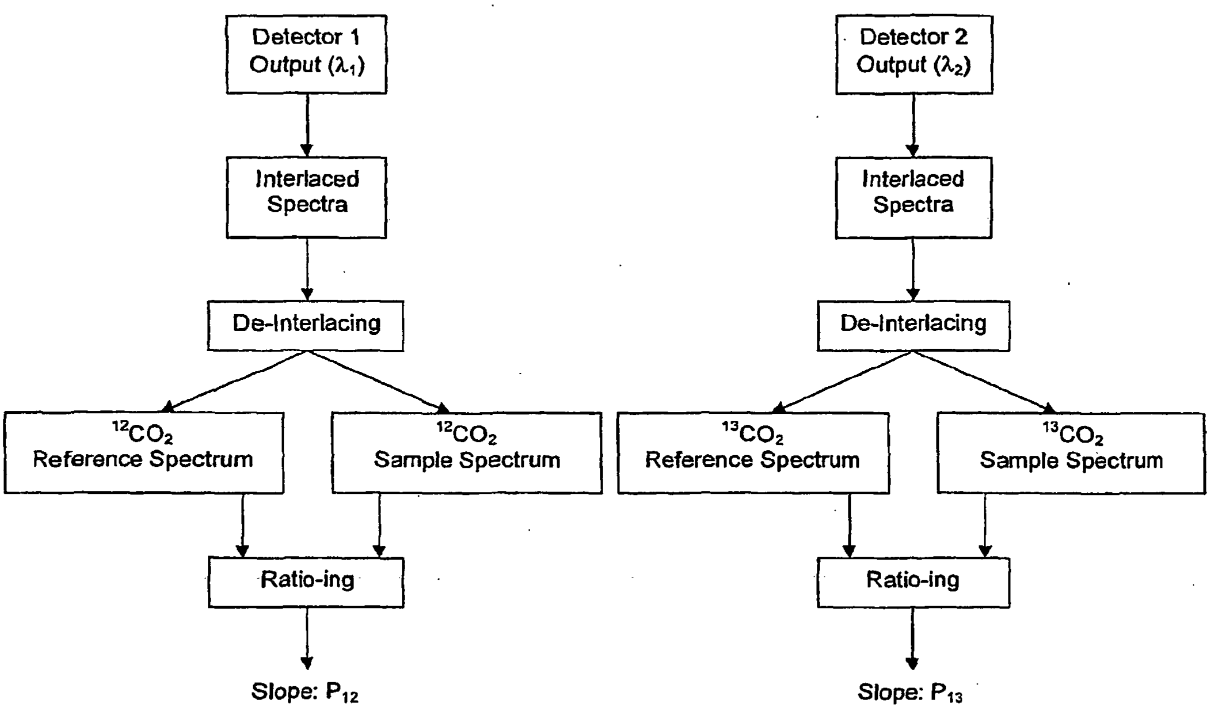
Detector 1
Output ($\lambda_1$)
Interlaced
Spectra
De-Interlacing
$^{12}CO_2$
Reference Spectrum
$^{12}CO_2$
Sample Spectrum
Ratio-ing
Slope: $P_{12}$
Detector 2
Output ($\lambda_2$)
Interlaced
Spectra
De-Interlacing
$^{13}CO_2$
Reference Spectrum
$^{13}CO_2$
Sample Spectrum
Ratio-ing
Slope: $P_{13}$

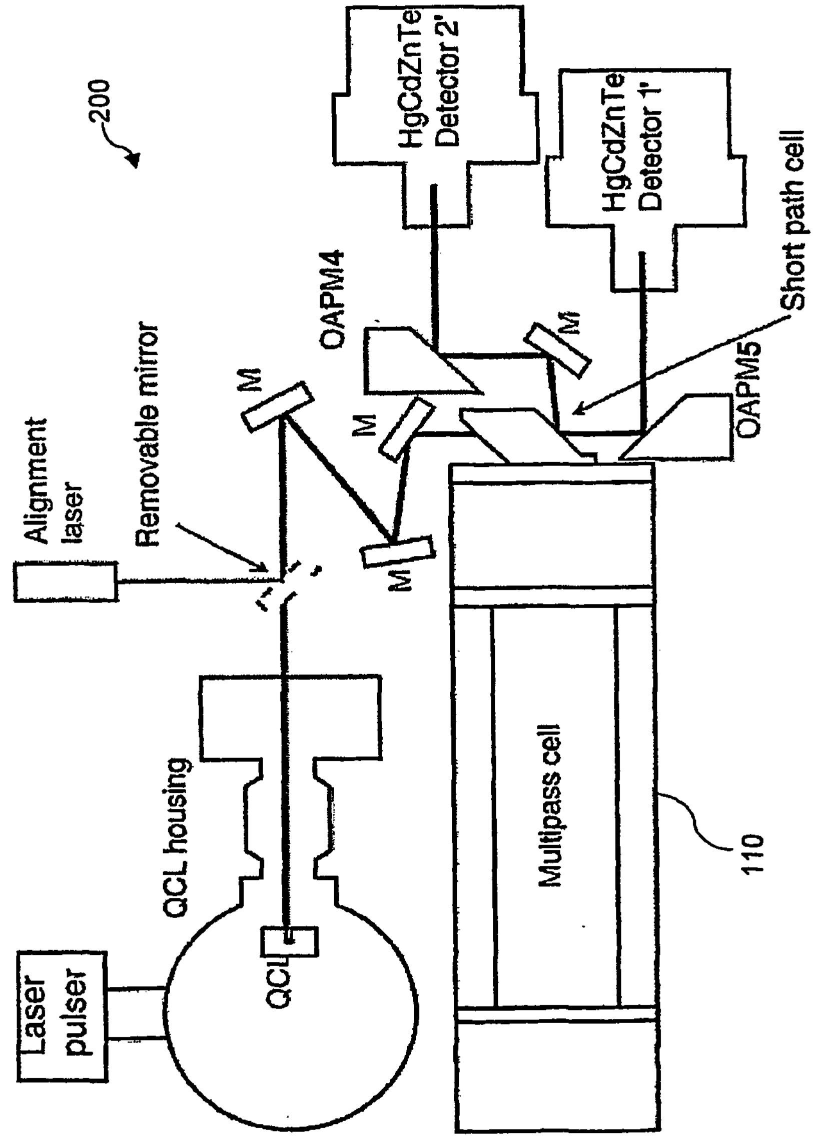
200
Alignment laser
Removable mirror
M
M
M
M
OAPM4
OAPM5
HgCdZnTe Detector 2'
HgCdZnTe Detector 1'
Short path cell
Laser pulser
QCL
QCL housing
Multipass cell
110

FIG. 4

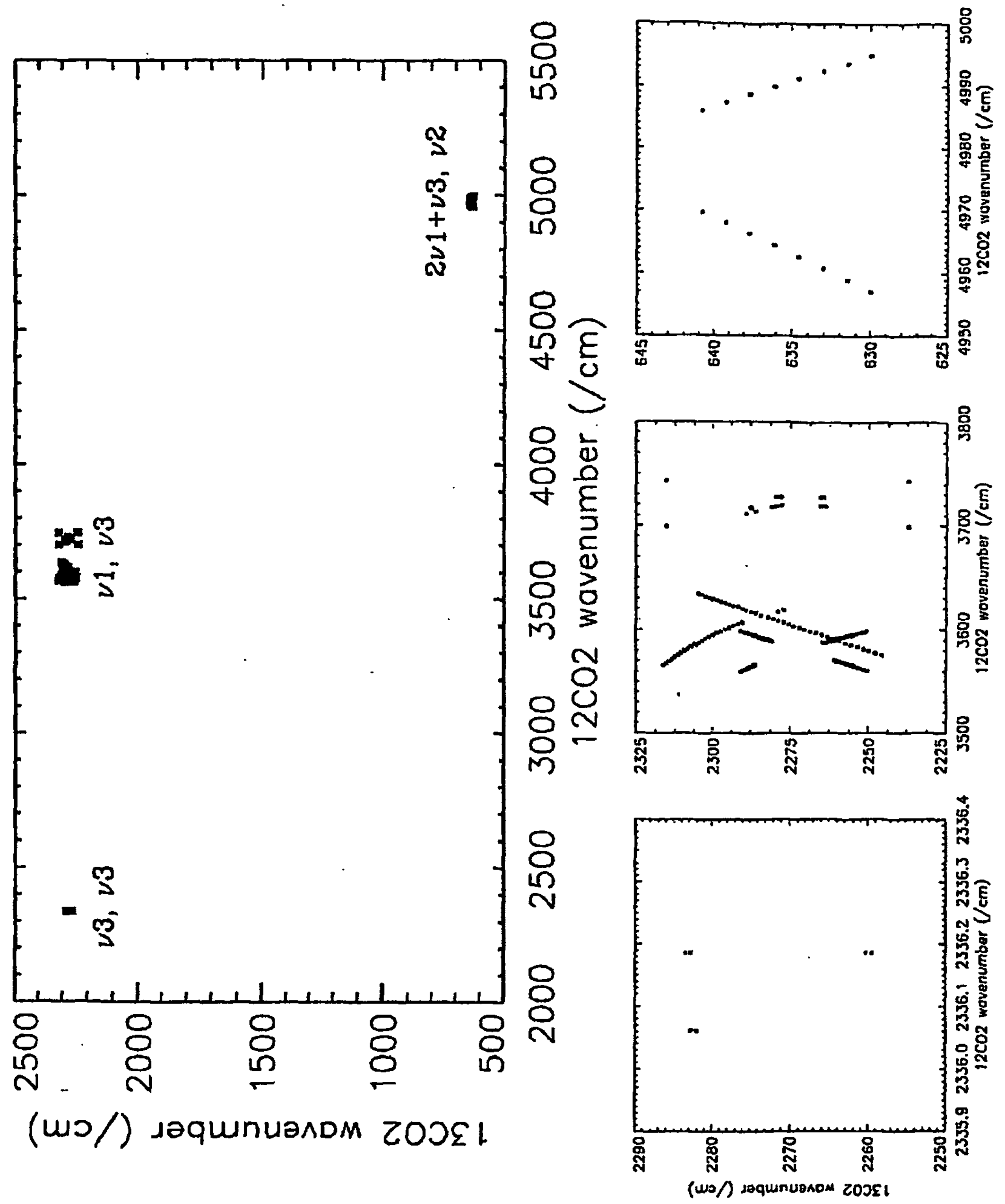


FIG. 5

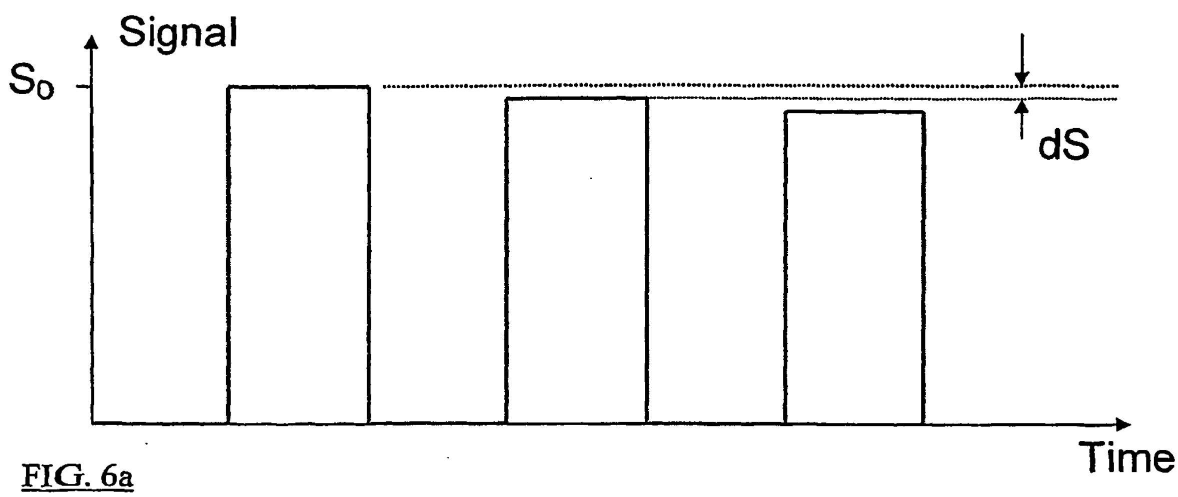


FIG. 6a

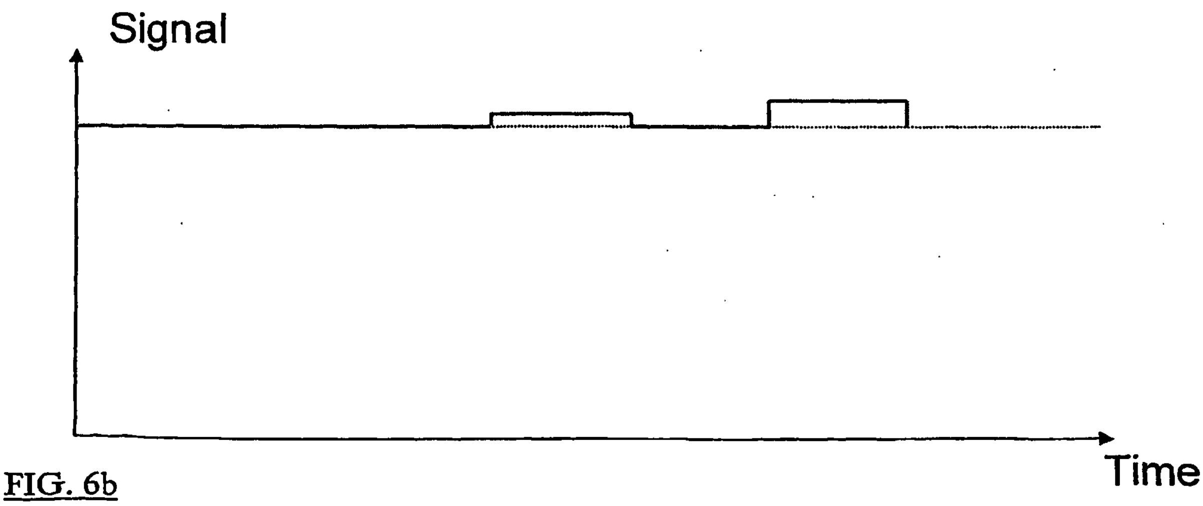


FIG. 6b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003014631 A


### Non-patent literature cited in the description


- **DAMIEN WEIDMANN et al.** Carbon isotopomers measurement using mid-IR tunable laser sources. *Isotopes in Environmental and Health Studies,* December 2005, vol. 41 (4), 293-302
- Development of a compact quantum cascade laser spectrometer for field measurements of CO2 isotopes. *Appl. Phys. B,* 2005, vol. 80, 255-260